# EUROPÄISCHE PATENTSCHRIFT

(11) **EP 3 581 688 B1**
(45) Veröffentlichungstag und Bekanntmachung des Hinweises auf die Patenterteilung: **27.01.2021**
(21) Anmeldenummer: 19172875.7
(22) Anmeldetag: 07.05.2019
(51) Int. Cl.: D02G 3/48, B60C 9/00, D01F 6/62

(54) **VERSTÄRKUNGSCORD FÜR ELASTOMERE ERZEUGNISSE, INSBESONDERE FÜR FAHRZEUGLUFTREIFEN, UND ELASTOMERES ERZEUGNIS**
REINFORCEMENT CORD FOR ELASTOMERIC PRODUCTS, IN PARTICULAR FOR VEHICLE TYRES AND ELASTOMERIC PRODUCT
CORDON DE RENFORCEMENT POUR PRODUITS ÉLASTOMÈRES, EN PARTICULIER POUR PNEUMATIQUES DE VÉHICULE ET PRODUITS ÉLASTOMÈRES

(30) Priorität: 14.06.2018 DE 102018209528
(43) Veröffentlichungstag der Anmeldung: 18.12.2019
(73) Patentinhaber: Continental Reifen Deutschland GmbH, 30165 Hannover (DE)
(72) Erfinder: Schunack, Michael, 30165 Hannover (DE); Kramer, Thomas, 30165 Hannover (DE)
(74) Vertreter: Finger, Karsten

(56) Entgegenhaltungen:
- WO-A1-2014/040804
- ZIA KHALID MAHMOOD ET AL: "Recent developments and future prospects on bio-based polyesters derived from renewable resources: A review", INTERNATIONAL JOURNAL OF BIOLOGICAL MACROMOLECULES, ELSEVIER BV, NL, Bd. 82, 19. Oktober 2015 (2015-10-19), Seiten 1028-1040, XP029357945, ISSN: 0141-8130, DOI: 10.1016/J.IJBIOMAC.2015.10.040
- PAPAGEORGIOU GEORGE. Z ET AL: "Synthesis of the bio-based polyester poly(propylene 2,5-furan dicarboxylate). Comparison of thermal behavior and solid state structure with its terephthalate and naphthalate homologues", POLYMER, Bd. 62, 14. Februar 2015 (2015-02-14), Seiten 28-38, XP029209202, ISSN: 0032-3861, DOI: 10.1016/J.POLYMER.2015.01.080

## Beschreibung

Die Erfindung betrifft einen Verstärkungscord für elastomere Erzeugnisse, insbesondere für Fahrzeugluftreifen, enthaltend zumindest ein Garn aus Filamenten.

Ferner betrifft die Erfindung ein elastomeres Erzeugnis, das zumindest einen Verstärkungscord enthält.

Eine Vielzahl elastomerer Erzeugnisse, wie Schläuche, Förderbänder, Antriebsriemen und Fahrzeugluftreifen, sind mit Verstärkungscorden zur Verstärkung versehen. Verstärkungscorde bestehen aus einem oder mehreren miteinander verdrehten Garnen und sind dem Fachmann in Aufbau und Material in unterschiedlichsten Ausführungen bekannt. Dabei kann es sich bei zwei oder mehr Garnen um das gleiche Material handeln oder, wie im Fall der Hybridcorde, um wenigstens zwei verschiedene Garne. Die Garne sind in der Regel aus vielen einzelnen Filamenten (Fasern) aufgebaut. Die Verstärkungscorde werden z. B. in Form von Geweben, Gelegen oder Gewirken in den elastomeren Erzeugnissen eingesetzt und bei der Herstellung der elastomeren Erzeugnisse üblicherweise in eine Kautschukmischung eingebettet.

Bisher werden in elastomeren Erzeugnissen, insbesondere in Karkasslagen, Wulstverstärkern, Gürteln oder Gürtelbandagen von Fahrzeugluftreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt. Andererseits ist es bekannt, nichterdölbasierte textile Festigkeitsträger aus Viskose, wie beispielsweise Rayon oder Lyocell einzusetzen.

Nachteilig an vielen Naturfasern, also an nicht-erdölbasierten Materialien als Material für Verstärkungscorde ist, dass diese keine endlose Faserstruktur und eine stark schwankende Faserqualität aufweisen.

Zudem erschwert z. B. das fehlende Schrumpfverhalten von Rayon den Einsatz beispielsweise als Gürtelbandage von Fahrzeugluftreifen. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen, zu entwickeln und einzusetzen, ohne Einbußen in der Haltbarkeit der daraus hergestellten Produkte hinnehmen zu müssen.

So sind aus der DE 102010017107 A1 Hybridcorde für z.B. Karkasslagen und/oder Gürtelbandagen bekannt, die wenigstens aus einem Garn aus recyceltem PET (Polyethylenterephthalat) bestehen.

Aus der EP 2 590 811 A1 sind Multifilamentgarne mit Polyamid 10.10-Fasern bekannt, wobei die beiden Ausgangsmonomere 1,10-Decamethylendiamin und 1,10-Decandisäure aus Ricinusöl als nachwachsendem Rohstoff gewonnen werden. Diese Multifilamentgarne können in Fahrzeugluftreifen als Festigkeitsträger eingesetzt werden.

In der EP 2 708 380 A1 werden Verstärkungscorde für elastomere Erzeugnisse, insbesondere für Fahrzeugreifen, beschrieben, bei denen zumindest ein Garn aus PET besteht, welches vollständig oder zumindest teilweise aus nachwachsenden Rohstoffen hergestellt ist.

Die EP 2 895 648 A1 offenbart Verstärkungscorde für elastomere Erzeugnisse, insbesondere für Fahrzeugreifen, bei denen zumindest ein Garn aus PEF (Polyethylenfuranoat) besteht, welches vollständig oder zumindest teilweise aus Biomassen und/oder nachwachsenden Rohstoffen hergestellt ist. PEF neigt allerdings zu einer schnellen Kristallisation nach dem Spinnvorgang zu einem Garn, so dass das Material z. T. spröde, nicht wickelbar und nicht verstreckbar ist. PEF wird als Ersatz für PET in Erwägung gezogen.

Der vorliegenden Erfindung liegt nun die Aufgabe zu Grunde, einen Verstärkungscord für elastomere Erzeugnisse, insbesondere für Fahrzeugluftreifen, enthaltend zumindest ein Garn bereitzustellen, der eine Alternative zu herkömmlichen Verstärkungscorden darstellt, umweltfreundliche und ressourcenschonende Materialien enthält, nachhaltig produziert werden kann und der sich gut ohne zu frühe Versprödung des gesponnen Materials verarbeiten lässt. Zudem soll der Verstärkungscord eine gleichbleibende Produktqualität aufweisen.

Die Aufgabe wird dadurch gelöst, dass zumindest ein Garn des Verstärkungscordes Filamente aus Polypropylendicarboxyfuranoat (PPF) enthält, wobei das PPF vollständig oder zumindest teilweise aus Biomassen und/oder nachwachsenden Rohstoffen hergestellt ist.

Polypropylendicarboxyfuranoat (PPF), auch Polypropylenfuranoat oder Poly(propylen 2,5-furandicarboxylat) genannt, ist ein alipharomatischer Polyester der formal durch die Polykondensation von 1,3-Propandiol und 2,5-Furandicarbonsäure hergestellt wird.

Die Verwendung von PPF aus Biomassen und/oder nachwachsenden Rohstoffen im erfindungsgemäßen Verstärkungscord für elastomere Erzeugnisse ist nachhaltig, umweltfreundlich und ressourcenschonend. Zudem weist vollständig oder zumindest teilweise aus Biomassen und/oder nachwachsenden Rohstoffen erzeugtes PPF ebenfalls wie nur aus fossilen Rohstoffen gewonnenes PPF eine gleichbleibende Qualität auf. Somit kann eine gleichbleibende Produktqualität sichergestellt werden. Die im Vergleich zu PEF höhere und ungerade Anzahl an Methyleneinheiten im Diolsegment führt zu einem geringeren Schmelzpunkt und einem niedrigeren Grad an Kristallinität. Das Material kann besser ohne frühzeitige Versprödung gesponnen und aufgewickelt werden. Es lässt sich besser verstrecken. Sein Schmelzpunkt liegt bei ca. 200 °C. Zudem ist PPF besser biologisch abbaubar als PEF.

Unter dem Passus "PPF aus vollständig oder zumindest teilweise aus nachwachsenden Rohstoffen hergestellt" ist im Rahmen der Erfindung zu verstehen, dass das PPF - ungeachtet der Energiequelle bei der Herstellung - stofflich vollständig oder zumindest teilweise aus Biomassen und/oder nachwachsenden Rohstoffen hergestellt ist. PPF, das vollständig oder zumindest teilweise aus Biomassen und/oder nachwachsenden Rohstoffen besteht, wird nicht nur oder gar nicht (zu 0 Gew.-%) aus fossilen Rohstoffen wie Erdöl gewonnen.
Wie dem Fachmann bekannt ist, kann der Anteil der biobasierten Stoffe, also der Anteil aus nachwachsenden Rohstoffen und/oder Biomassen, im PPF gemäß der ASTM D 6866 (C-14-Methode) bestimmt werden.

Unter Biomasse wird im Rahmen der Erfindung die Gesamtheit allen organischen Materials, das durch Wachstum und Stoffwechsel von Tieren, Pflanzen oder Mikroorganismen gebildet wird, verstanden.

Unter nachwachsenden Rohstoffen werden im Rahmen der Erfindung biogene Ressourcen aus Aquakultur und aus land- und forstwirtschaftlichen Quellen bezeichnet. Unter nachwachsenden Rohstoffen werden daher keine fossilen Quellen, wie Erdöl, verstanden, die durch Abbau zugänglich sind.

Beim PPF kann zum einen das zugrundeliegende Monomer 2,5-Furandicarbonsäure aus Biomassen und/oder nachwachsenden Rohstoffen, wie Cellulose, erzeugt werden, zum anderen kann auch das zweite Monomer 1,3- Propandiol aus Biomassen und/oder nachwachsenden Rohstoffen hergestellt werden. Z. B. gelingt es, 1,3-Propandiol biotechnologisch durch Vergärung von Glucose über speziell modifizierte Mikroorganismen zu erzeugen.

Bevorzugt werden beide Monomere aus Biomassen und/oder nachwachsenden Rohstoffen erzeugt.

Des Weiteren ist es denkbar, dass eines der beiden Monomere oder beide Monomere als Gemisch vorliegen, d. h., das oder die Monomer(e) dann teilweise aus Biomasse und/oder nachwachsenden Rohstoffen und teilweise aus Erdöl stammt bzw. stammen.

Innerhalb der Garne eines Verstärkungscordes können Filamante aus unterschiedlichen Materialien vorhanden sein. Gemäß einer vorteilhaften Weiterbildung der Erfindung bestehen aber alle Filamente zumindest eines Garnes aus Polypropylendicarboxyfuranoat (PPF). Derartige Garne lassen sich einfach spinnen und zum Garn verdrehen.

Der Verstärkungscord kann aus einem verdrehten, endlosen Multifilamentgarn bestehen. Es ist aber auch möglich, dass der Verstärkungscord zumindest ein weiteres Garn aus Filamenten enthält, wobei die Garne miteinander endverdreht sind. Es sind z. B. Cordkonstruktionen möglich, bei denen zwei (x2-Konstruktion) oder drei (x3-Konstruktion) Garne zu einem Verstärkungscord endverdreht sind.

Das oder die weiteren Garne können aus Filamenten unterschiedlichen Materials bestehen. Sind innerhalb des Verstärkungscordes Garne aus unterschiedlichem Material vorhanden, handelt es sich um einen sogenannten Hybridcord.

Bei dem Material für das weitere Garn kann es sich vorzugsweise um nichtmetallisches Material, wie beispielsweise um Polyester, aliphatische und aromatische Polyamide, Aramid, Polyetherketon, Polyketon, Polyethylennaphthalat, Viskose, Naturfasern oder Glasfasern, handeln. Durch geeignete Materialauswahl kann der Verstärkungscord gezielt in seinen Eigenschaften eingestellt werden.

Gemäß einer bevorzugten Weiterbildung der Erfindung besteht das zumindest eine weitere Garn des Verstärkungscordes aus Filamenten aus Polyamid, einem anderen Polyestertyp als Polypropylendicarboxyfuranoat (PPF), Aramid, Polyketon, oder vorzugsweise aus Chemiefasern aus natürlichen Polymeren oder Naturfasern. Bei Chemiefasern aus natürlichen Polymeren oder Naturfasern bietet sich der Vorteil, dass der gesamte Verstärkungscord auf Materialien basiert, die umweltfreundlich und ressourcenschonend sind und beispielsweise nicht auf Rohöl basieren.

Um ein höheres Schrumpfverhalten des Verstärkungscordes zu erhalten, ist es gemäß einer weiteren vorteilhaften Weiterbildung der Erfindung bevorzugt, wenn er aus wenigstens einem Garn aus Polypropylendicarboxyfuranoat (PPF) und wenigstens einem weiteren Garn aus einem Polyamid (PA) besteht. Dieses ist insbesondere für die Verwendung dieses Hybridcordes in der Gürtelbandage eines PKW-Reifens von Vorteil.

Besonders bevorzugt besteht das weitere Garn aus PA 6.6- und/oder PA 6-Filamenten und/oder PA 10.10-Filamenten und/oder PA 10.12-Filamenten und/oder PA PACM 12-Filamenten. Ganz besonders bevorzugt besteht das Garn aus PA 6.6-Filamenten.

Um einen höheren Modul des Verstärkungscordes zu erhalten, besteht er aus wenigstens einem Garn aus Polypropylendicarboxyfuranoat (PPF) und wenigstens einem weiteren Garn aus Aramid. Dieses ist insbesondere für die Verwendung dieses Hybridcordes in der Gürtelbandage von UHP- (Ultra High Performance-) Reifen von Vorteil.

Um einen stabilen Verstärkungscord weitgehend ohne Schrumpf zu erhalten, besteht er aus wenigstens einem Garn aus Polypropylendicarboxyfuranoat (PPF) und wenigstens einem weiteren Garn aus Rayon. Dieses ist insbesondere für die Verwendung dieses Hybridcordes in der Karkasse von PKW-Reifen und für das Hochgeschwindigkeits-Verhalten von PKW-Reifen von Vorteil.

Alternativ zu den genannten Hybridcorden kann es sich bei dem Verstärkungscord auch um einen solchen handeln, bei dem alle Garne aus Polypropylendicarboxyfuranoat (PPF)-Filamenten bestehen. Dieser Verstärkungscord lässt sich einfach herstellen und ist besonders umweltfreundlich, da er nur von nachwachsenden Rohstoffen abgeleitet ist.

Bei dem Verstärkungscord weist das Garn bzw. weisen die Garne vorzugsweise eine Feinheit von 200 bis 5000 dtex auf. Das Garn ist bzw. die Garne sind dabei vorzugweise mit einer Verdrehung von 100 bis 600 t/m, bevorzugt 100 bis 550 t/m, besonders bevorzugt 200 bis 550 t/m, verdreht. Derartige Verstärkungscorde lassen sich einfach herstellen und können z. B. als Festigkeitsträger in Fahrzeugluftreifen eingesetzt werden.

Handelt es sich bei dem Verstärkungscord um einen Cord aus mehreren Garnen, sind diese Garne bevorzugt mit einer Verdrehung von 100 bis 600 t/m, bevorzugt 100 bis 550 t/m, besonders bevorzugt 200 bis 550 t/m, endverdreht. Besonders bevorzugt ist es, wenn die Erstverdrehung des Garnes und die Endverdrehung des Cordes in ihrer Verdrehungszahl ungefähr übereinstimmen, wobei vorzugsweise die Drehrichtungen von Garnen und Cord entgegengesetzt sind.

Um eine ausreichende Ermüdungsbeständigkeit der Verstärkungscorde zu erhalten, ist es von Vorteil, wenn der Twistfaktor α eines jeden Garnes oder des Verstärkungscordes zwischen 100 bis 300, vorzugsweise zwischen 150 und 250, liegt, wobei sich der Twistfaktor α nach folgender Formel berechnet: α=Twist [t/m] x (Feinheit [tex]/1000)^{1/2}.

Um eine zuverlässige Haftung von textilen Festigkeitsträgern zum Gummi zu gewährleisten, ist es zweckmäßig, den erfindungsgemäßen Verstärkungscord mit einer Haftimprägnierung, z.B. mit einem RFL-Dip im 1- oder 2-Bad-Verfahren, zu versehen.

Der erfindungsgemäße Verstärkungscord kann in unterschiedlichsten elastomeren Erzeugnissen, wie Riemen, Fördergurten, Schläuchen oder Luftfedern, eingesetzt werden.

Bei dem erfindungsgemäßen elastomeren Erzeugnis handelt es sich vorzugsweise um einen Fahrzeugluftreifen. Fahrzeugluftreifen sind Massenprodukte, bei denen der Austausch herkömmlicher Verstärkungscorde gegen biobasierte Verstärkungscorde, zu einem besonders großen Effekt hinsichtlich der Ressourcenschonung führt.

Bevorzugt enthält der Fahrzeugluftreifen den Verstärkungscord in der Karkasslage und/oder in wenigstens einer Gürtellage und/oder als Wulstverstärker und/oder in der Gürtelbandage. Besonders bevorzugt enthält der Fahrzeugluftreifen den Verstärkungscord in der Karkasslage und/oder in der Gürtelbandage.

## Patentansprüche

1. Verstärkungscord für elastomere Erzeugnisse, insbesondere für Fahrzeugluftreifen, enthaltend zumindest ein Garn aus Filamenten, **dadurch gekennzeichnet, dass** zumindest ein Garn des Verstärkungscordes Filamente aus Polypropylendicarboxyfuranoat (PPF) enthält, wobei das PPF vollständig oder zumindest teilweise aus Biomassen und/oder nachwachsenden Rohstoffen hergestellt ist.

2. Verstärkungscord nach Anspruch 1, **dadurch gekennzeichnet, dass** zumindest ein Garn des Verstärkungscordes Filamente aus Polypropylendicarboxyfuranoat (PPF) enthält, wobei das PPF vollständig aus Biomassen und/oder nachwachsenden Rohstoffen hergestellt ist.

3. Verstärkungscord nach Anspruch 1 oder 2, **dadurch gekennzeichnet, dass** das alle Filamente zumindest eines Garnes aus Polypropylendicarboxyfuranoat (PPF) bestehen.

4. Verstärkungscord nach zumindest einem Ansprüche 1 bis 3, **dadurch gekennzeichnet, dass** er zumindest ein weiteres Garn aus Filamenten enthält, wobei die Garne miteinander endverdreht sind.

5. Verstärkungscord nach Anspruch 4, **dadurch gekennzeichnet, dass** das zumindest eine weitere Garn aus Filamenten aus einem nichtmetallischen Material besteht.

6. Verstärkungscord nach zumindest einem der Ansprüche 4 bis 5, **dadurch gekennzeichnet, dass** das zumindest eine weitere Garn aus Filamenten aus Polyamid, einem anderen Polyester als Polypropylendicarboxyfuranoat (PPF), Aramid, Polyketon, oder vorzugsweise aus Chemiefasern aus natürlichen Polymeren oder Naturfasern besteht.

7. Verstärkungscord nach zumindest einem der Ansprüche 1 bis 5, **dadurch gekennzeichnet, dass** alle Garne des Verstärkungscordes aus Polypropylendicarboxyfuranoat (PPF)-Filamenten bestehen.

8. Verstärkungscord nach zumindest einem der Ansprüche 1 bis 7, **dadurch gekennzeichnet, dass** das Garn bzw. die Garne eine Feinheit von 200 und 5000 dtex aufweisen.

9. Verstärkungscord nach zumindest einem der Ansprüche 1 bis 8, **dadurch gekennzeichnet, dass** der Twistfaktor α eines jeden Garnes oder des Verstärkungscordes zwischen 100 bis 300, vorzugsweise zwischen 150 und 250, liegt, wobei sich der Twistfaktor α nach folgender Formel berechnet: α=Twist [t/m] x (Feinheit [tex]/1000)^{1/2}.

10. Elastomeres Erzeugnis, **dadurch gekennzeichnet, dass** es zumindest einen Verstärkungscord nach einem der Ansprüche 1 bis 9 enthält.

11. Elastomers Erzeugnis nach Anspruch 10, **dadurch gekennzeichnet, dass** es sich um einen Riemen, einen Fördergurt, einen Schlauch oder eine Luftfeder handelt.

12. Elastomers Erzeugnis nach Anspruch 10, **dadurch gekennzeichnet, dass** es sich um einen Fahrzeugluftreifen handelt.

13. Elastomeres Erzeugnis nach Anspruch 12, **dadurch gekennzeichnet, dass** der Fahrzeugluftreifen zumindest einen Verstärkungscord nach einem der Ansprüche 1 bis 8 in der Karkasslage und/oder in wenigstens einer Gürtellage und/oder als Wulstverstärker und/oder in der Gürtelbandage enthält.

## Claims

1. Reinforcement cord for elastomeric products, in particular for pneumatic tires, comprising at least one yarn made of filaments, **characterized in that** at least one yarn of the reinforcement cord comprises filaments made of polypropylene dicarboxyfuranoate (PPF), where the PPF has been produced entirely or at least to some extent from biomass and/or from renewable raw materials.

2. Reinforcement cord according to Claim 1, **characterized in that** at least one yarn of the reinforcement cord comprises filaments made of polypropylene dicarboxyfuranoate (PPF), where the PPF has been produced entirely from biomass and/or from renewable raw materials.

3. Reinforcement cord according to Claim 1 or 2, **characterized in that** all filaments at least of one yarn consist of polypropylene dicarboxyfuranoate (PPF).

4. Reinforcement cord according to at least one of Claims 1 to 3, **characterized in that** it comprises at least one further yarn made of filaments, where the yarns have undergone end-twisting together.

5. Reinforcement cord according to Claim 4, **characterized in that** the at least one further yarn consists of filaments made of a nonmetallic material.

6. Reinforcement cord according to at least one of Claims 4 to 5, **characterized in that** the at least one further yarn consists of filaments made of polyamide, of a polyester other than polypropylene dicarboxyfuranoate (PPF), of aramid, of polyketone, or preferably of manufactured fibers made of natural polymers or of natural fibers.

7. Reinforcement cord according to at least one of Claims 1 to 5, **characterized in that** all yarns of the reinforcement cord consist of polypropylene dicarboxyfuranoate (PPF) filaments.

8. Reinforcement cord according to at least one of Claims 1 to 7, **characterized in that** the linear density of the yarn(s) is 200 and 5000 dtex.

9. Reinforcement cord according to at least one of Claims 1 to 8, **characterized in that** the twist factor α of each yarn or of the reinforcement cord is between 100 and 300, preferably between 150 and 250, where the twist factor α is calculated according to the following formula: α = twist [t/m] x (linear density [tex]/1000)^{1/2}.

10. Elastomeric product, **characterized in that** it comprises at least one reinforcement cord according to any of Claims 1 to 9.

11. Elastomeric product according to Claim 10, **characterized in that** it is a drive belt, a conveyor belt, a hose or an air spring.

12. Elastomeric product according to Claim 10, **characterized in that** it is a pneumatic tire.

13. Elastomeric product according to Claim 12, **characterized in that** the pneumatic tire comprises at least one reinforcement cord according to any of Claims 1 to 8 in the carcass ply and/or in at least one bracing ply and/or as bead reinforcer and/or in the belt bandage.

## Revendications

1. Cordon de renfort destiné à des produits élastomères, en particulier à des pneumatiques de véhicule, ledit cordon de renfort contenant au moins un fil en filaments, **caractérisé en ce qu'**au moins un fil du cordon de renfort contient des filaments en dicarboxyfuranoate de polypropylène (PPF), le PPF étant produit entièrement ou au moins partiellement à partir de biomasse et/ou de matières premières renouvelables.

2. Cordon de renfort selon la revendication 1, **caractérisé en ce qu'**au moins un fil du cordon de renfort contient des filaments en dicarboxyfuranoate de polypropylène (PPF), le PPF étant entièrement produit à partir de biomasse et/ou de matières premières renouvelables.

3. Cordon de renfort selon la revendication 1 ou 2, **caractérisé en ce que** tous les filaments d'au moins un fil sont en dicarboxyfuranoate de polypropylène (PPF).

4. Cordon de renfort selon l'une au moins des revendications 1 à 3, **caractérisé en ce qu'**il contient au moins un autre fil formé de filaments, les fils étant torsadés de bout en bout.

5. Cordon de renfort selon la revendication 4, **caractérisé en ce que** l'au moins un autre fil est formé de filaments en matériau non métallique.

6. Cordon de renfort selon l'une au moins des revendications 4 et 5, **caractérisé en ce que** l'au moins un autre fil est formé de filaments en polyamide, en polyester autre que le dicarboxyfuranoate de polypropylène (PPF), en aramide, en polycétone, ou de préférence en fibres synthétiques en polymères naturels ou en fibres naturelles.

7. Cordon de renfort selon l'une au moins des revendications 1 à 5, **caractérisé en ce que** tous les fils du cordon de renfort sont formés de filaments de dicarboxyfuranoate de polypropylène (PPF).

8. Cordon de renfort selon l'une au moins des revendications 1 à 7, **caractérisé en ce que** le fil ou les fils ont une finesse de 200 et 5000 dtex.

9. Cordon de renfort selon l'une au moins des revendications 1 à 8, **caractérisé en ce que** le facteur de torsion α de chaque fil ou du cordon de renfort est compris entre 100 et 300, de préférence entre 150 et 250, le facteur de torsion α étant calculé selon la formule suivante : α = Torsion [t/m] x (finesse [tex]/1000)^{1/2}.

10. Produit élastomère, **caractérisé en ce qu'**il contient au moins un cordon de renfort selon l'une des revendications 1 à 9.

11. Produit élastomère selon la revendication 10, **caractérisé en ce que** celui-ci est une courroie, une bande transporteuse, un tuyau ou un ressort pneumatique.

12. Produit élastomère selon la revendication 10, **caractérisé en ce que** celui-ci est un pneumatique de véhicule.

13. Produit élastomère selon la revendication 12, **caractérisé en ce que** le pneumatique de véhicule contient au moins un cordon de renfort selon l'une des revendications 1 à 8 dans la couche de carcasse et/ou dans au moins une couche de ceinture et/ou comme renfort de talon et/ou dans le bandage de ceinture.
